# EUROPÄISCHE PATENTSCHRIFT

(11) **EP 1 875 123 B1**
(45) Veröffentlichungstag und Bekanntmachung des Hinweises auf die Patenterteilung: **18.05.2016**
(21) Anmeldenummer: 06742232.9
(22) Anmeldetag: 10.04.2006
(51) Int. Cl.: F21S 8/10, F21V 14/00, F21W 101/02, F21Y 115/10

(54) **KFZ-SCHEINWERFER**
MOTOR-VEHICLE HEADLAMP
PHARE DE VEHICULE A MOTEUR

(30) Priorität: 29.04.2005 DE 102005020085
(43) Veröffentlichungstag der Anmeldung: 09.01.2008
(73) Patentinhaber: OSRAM Opto Semiconductors GmbH, 93055 Regensburg (DE)
(72) Erfinder: ENGL, Moritz, 93055 Regensburg (DE); GRÖTSCH, Stefan, 93077 Lengfeld/Bad Abbach (DE); HOFMANN, Markus, 93077 Bad Abbach (DE); HUBER, Rainer, 93080 Pentling (DE); LANG, Kurt Jürgen, 94209 Regen (DE); WANNINGER, Mario, 93055 Harting/Regensburg (DE)
(74) Vertreter: Epping - Hermann - Fischer
(86) Internationale Anmeldenummer: PCT/DE2006/000631
(87) Internationale Veröffentlichungsnummer: WO 2006/116960

(56) Entgegenhaltungen:
- EP-A- 1 195 552
- EP-A2- 1 130 416
- DE-A1- 4 429 496
- DE-A1- 10 005 795
- DE-A1- 10 321 564
- DE-B- 1 167 773
- GB-A- 1 451 066
- JP-A- H07 245 003
- US-A- 3 316 442
- US-A- 4 985 816
- US-A- 6 059 435
- US-A1- 2005 047 153
- US-B1- 6 883 947

## Beschreibung

Es wird ein Kfz-Scheinwerfer angegeben.

Die Druckschriften US 6,601,982 B2, DE 100 05 795 A1, US 4,985,816 A, EP 1 195 552 A2, US 6,059,435 A, DE 103 21 564 A1, US 3,316,442 A, EP 1 130 416 A2, JP H07-245003, GB 1 451 066 A, DE 4 429 496 A1 und US 2005/0047153 A1 beschreiben jeweils einen Scheinwerfer und/oder einen Kfz-Scheinwerfer.

Eine zu lösende Aufgabe besteht darin, einen besonders langlebigen Kfz-Scheinwerfer anzugeben. Eine weitere zu lösende Aufgabe besteht darin, einen Kfz-Scheinwerfer anzugeben, der besonders vielseitig einsetzbar ist. Darüber hinaus ist es eine zu lösende Aufgabe, einen Kfz-Scheinwerfer mit besonders variabler Abstrahlcharakteristik anzugeben.

Diese Aufgabe wird durch den Kfz-Scheinwerfer, aufweisend eine Vorrichtung zum steuerbaren Manipulieren des Strahlengangs mit einem Umlenkspiegel, gemäß dem Patentanspruch 1 gelöst.

Gemäß zumindest einer Ausführungsform des Kfz-Scheinwerfers enthält der Kfz-Scheinwerfer eine Leuchtdiode. Bevorzugt enthält der Kfz-Scheinwerfer eine Vielzahl von Leuchtdioden. Jede Leuchtdiode enthält wenigstens einen Leuchtdiodenchip. Bevorzugt enthält die Leuchtdiode mehrere Leuchtdiodenchips. Den Leuchtdiodenchips einer Leuchtdiode ist vorzugsweise eine Leuchtdiodenoptik in Hauptabstrahlrichtung der Leuchtdiodenchips nachgeordnet.

Bevorzugt sind die Leuchtdioden des Kfz-Scheinwerfers geeignet, weißes Licht zu erzeugen. Dazu kann eine Leuchtdiode des Kfz-Scheinwerfers mehrere Leuchtdiodenchips umfassen, deren Strahlung sich zu weißem Licht mischt. Es ist ferner auch möglich, dass den Leuchtdiodenchips der Leuchtdiode ein Lumineszenzkonversionsmaterial nachgeordnet ist. Die von den Leuchtdiodenchips abgestrahlte elektromagnetische Strahlung mischt sich dann mit dem frequenzkonvertierten Anteil der Strahlung zu weißem Licht.

Es ist darüber hinaus auch möglich, dass zumindest eine der Leuchtdioden des Scheinwerfers geeignet ist, Licht einer bestimmten Farbe - beispielsweise gelbes Licht zu erzeugen. Darüber hinaus ist es weiter möglich, dass zumindest eine der Leuchtdioden des Scheinwerfers geeignet ist, elektromagnetische Strahlung im Infraroten zu erzeugen.

Gemäß zumindest einer Ausführungsform des Kfz-Scheinwerfers enthält der Kfz-Scheinwerfer eine Vorrichtung zum steuerbaren Manipulieren des Strahlengangs der von der Leuchtdiode emittierten elektromagnetischen Strahlung. Bevorzugt ist die Vorrichtung geeignet, die Strahlengänge mehrerer der Vorrichtung zugeordneter Leuchtdioden steuerbar zu manipulieren.

Unter Manipulieren des Strahlengangs der von einer Leuchtdiode emittierten elektromagnetischen Strahlung ist beispielsweise eine Störung, eine Beeinflussung oder Änderung des Strahlengangs zu verstehen. Ein Manipulieren des Strahlengangs kann zum Beispiel eine Richtungsänderung, eine Änderung der Intensität, Kollimation, Streuung, Fokussierung, Filterung oder Frequenzkonvertierung der emittierten Strahlung umfassen. Die Vorrichtung ist dazu im Strahlengang der Leuchtdiode angeordnet.

Steuerbar heißt, dass die Manipulation in von außen vorgebbarer Weise erfolgt. Das bedeutet, dass beispielsweise ein menschlicher Benutzer oder eine Recheneinheit die Manipulation des Strahlengangs der Leuchtdiode mittels der Vorrichtung gezielt bewirken kann. Die Manipulation des Strahlengangs erfolgt dann in definierter, vorgebbarer Weise. Steuerbar bedeutet ferner, dass mittels der Vorrichtung zwischen zumindest zwei Zuständen geschaltet werden kann. Bevorzugt kann zwischen einer Vielzahl unterschiedlicher Zustände geschaltet werden. Das heißt, handelt es sich bei der Manipulation des Strahlengangs beispielsweise um eine Richtungsänderung der emittierten Strahlung, dann kann mittels der Vorrichtung zwischen wenigstens zwei Richtungen, in die der Strahlengang gelenkt wird, gewählt werden. Bevorzugt kann zwischen einer Vielzahl von Richtungen der Strahlung gewählt werden. Besonders bevorzugt ist die Richtungsänderung zumindest in einem bestimmten Winkelbereich kontinuierlich veränderbar.

Gemäß zumindest einer Ausführungsform des Kfz-Scheinwerfers enthält der Kfz-Scheinwerfer eine Leuchtdiode und eine Vorrichtung zum steuerbaren Manipulieren des Strahlengangs der von der Leuchtdiode emittierten elektromagnetischen Strahlung. Die von der Leuchtdiode abgegebene elektromagnetische Strahlung bildet zumindest einen Teil der vom Scheinwerfer abgegebenen elektromagnetischen Strahlung. Das heißt, die Abstrahlcharakteristik der Leuchtdiode bildet die Abstrahlcharakteristik des Scheinwerfers oder einen Teil der Abstrahlcharakteristik des Scheinwerfers indem sich die Abstrahlcharakteristika mehrer Leuchtdioden zur Abstrahlcharakteristik des Scheinwerfers überlagern. Mittels Manipulation des Strahlengangs der wenigstens einen Leuchtdiode ist es damit möglich, die Abstrahlcharakteristik des Scheinwerfers gezielt zu verändern. Unter Abstrahlcharakteristik ist dabei die räumliche Intensitäts- oder Helligkeitsverteilung des abgegebenen Lichts zu verstehen. Zum Beispiel kann der Scheinwerfer eine kegelförmige Abstrahlcharakteristik aufweisen. Das bedeutet dann, dass die Flächen gleicher Intensität oder Helligkeit des abgestrahlten Lichts im Raum einen Kegel bilden. Darüber hinaus sind viele weitere Formen der Abstrahlcharakteristik des Scheinwerfers möglich.

Der Scheinwerfer macht sich dabei unter anderem die Idee zu nutze, dass mittels der Vorrichtung durch Manipulation des Strahlengangs der von der Leuchtdiode abgegebenen elektromagnetischen Strahlung zwischen unterschiedlichen Abstrahlcharakteristika des Scheinwerfers geschaltet werden kann. So kann mittels der Vorrichtung zwischen Abstrahlcharakteristika für verschiedene Verkehrs- und Beleuchtungssituationen geschaltet werden. Die Vorrichtung ist beispielsweise geeignet, unterschiedliche Abstrahlcharakteristika für Stadtfahrten, Autobahnfahrten und / oder verschiedene Wetterbedingungen wie Regen und Nebel definiert einzustellen. Es ist darüber hinaus auch möglich, dass die Vorrichtung ein Nachführen der Richtung der Abstrahlcharakteristik des Scheinwerfers bei Kurvenfahrten ermöglicht.

Gemäß zumindest einer Ausführungsform des Kfz-Scheinwerfers ist die Vorrichtung geeignet, von der Leuchtdiode emittierte elektromagnetische Strahlung zu reflektieren. Das heißt, die Vorrichtung befindet sich zumindest teilweise im Strahlengang der Leuchtdiode und ist geeignet, zumindest einen Teil der von der Leuchtdiode emittierten elektromagnetischen Strahlung zu reflektieren. Die Vorrichtung kann dabei beispielsweise geeignet sein, die Richtung der von der Leuchtdiode abgegebenen elektromagnetischen Strahlung definiert einzustellen. Weiter ist es möglich, dass die Vorrichtung geeignet ist, die von der Leuchtdiode emittierte Strahlung mittels Reflexionen zu kolliminieren oder aufzuweiten. Weiter ist es möglich, dass die Vorrichtung zur diffusen Reflexion zumindest eines Teils der abgegebenen Strahlung geeignet ist.

Gemäß zumindest einer Ausführungsform des Kfz-Scheinwerfers ist die Vorrichtung geeignet, zumindest einen Teil der von der Leuchtdiode abgegebenen elektromagnetischen Strahlung zu brechen. Durch die Brechung kann beispielsweise eine Richtungsänderung, Kollimation oder Aufweitung der von der Leuchtdiode emittierten Strahlung erfolgen. Bevorzugt ist es mittels der Vorrichtung möglich, die Brechung definiert einzustellen. Das heißt beispielsweise, dass der Brechungsindex definiert einstellbar ist. Weiter ist es möglich, dass die Position eines optisch brechenden Elements im Strahlengang der Leuchtdiode mittels der Vorrichtung einstellbar ist. Das heißt etwa, dass ein bestimmter Teil der von der Leuchtdiode emittierten Strahlung definiert gebrochen werden kann und ein anderer Teil der Strahlung ungebrochen bleibt.

Gemäß zumindest einer Ausführungsform des Scheinwerfers ist die Vorrichtung geeignet, zumindest einen Teil der von der Leuchtdiode abgegebenen elektromagnetischen Strahlung zu streuen. Das bedeutet, von der Leuchtdiode abgegebene elektromagnetische Strahlung wird mittels der Vorrichtung aufgeweitet und durchmischt. Bevorzugt ist der Grad der Streuung, das heißt, die Aufweitung und der Grad der Durchmischung dabei einstellbar.

Gemäß zumindest einer Ausführungsform ist die Vorrichtung geeignet, die von der Leuchtdiode abgegebene Strahlung zu absorbieren. Das heißt, zumindest ein Teil der von der Leuchtdiode abgegebenen elektromagnetischen Strahlung kann mittels der Vorrichtung definiert absorbiert werden. Das kann zum Beispiel dadurch realisiert sein, dass eine Blende im Strahlengang der Leuchtdiode bewegbar ist.

Gemäß zumindest einer Ausführungsform ist die Vorrichtung geeignet, zumindest einen Teil der von der Leuchtdiode emittierten Strahlung zu filtern. Dazu kann beispielsweise ein Filterelement in den Strahlengang der Leuchtdiode bewegt werden. Die Vorrichtung ist auf diese Weise beispielsweise geeignet, die Intensität der von der Leuchtdiode abgegebenen Strahlung zu verringern. Damit kann die Abstrahlcharakteristik des Scheinwerfers an äußere Beleuchtungsverhältnisse angepasst werden. Weiter ist es möglich, dass die Vorrichtung geeignet ist, Strahlung bestimmter Wellenlänge zu filtern, sodass der Scheinwerfer Licht einer bestimmten Farbe abstrahlt. Auf diese Weise kann zum Beispiel gelbes Licht, das für Nebelfahrten besonders gut geeignet ist, eingestellt werden.

Gemäß zumindest einer Ausführungsform des Kfz-Scheinwerfers ist die Vorrichtung geeignet, mehrere der genannten Funktionen zu erfüllen. So kann die Vorrichtung beispielsweise geeignet sein, von der Leuchtdiode abgegebene elektromagnetische Strahlung zu reflektieren und gleichzeitig zu streuen. Dazu kann zum Beispiel ein diffus reflektierender Spiegel Verwendung finden. Weiter ist es möglich, dass die Vorrichtung beispielsweise geeignet ist, elektromagnetische Strahlung zu brechen und zu filtern. Dazu kann zum Beispiel eine Linse Verwendung finden, die Farbpigmente enthält. Darüber hinaus sind viele weitere Kombinationen der genannten Funktionen in einer Vorrichtung denkbar. Auch ist es möglich, dass mittels der Vorrichtung zwischen verschiedenen der genannten Funktionen geschaltet werden kann.

Gemäß zumindest einer Ausführungsform des Kfz-Scheinwerfers umfasst die Vorrichtung einen Umlenkspiegel. Der Umlenkspiegel ist geeignet, die Richtung zumindest eines Teils der von der Leuchtdiode emittierten elektromagnetischen Strahlung definiert zu ändern. Beispielsweise ist es durch eine Bewegung des Umlenkspiegels relativ zum Strahlengang der Leuchtdiode möglich, von der Leuchtdiode emittierte elektromagnetische Strahlung definiert in eine bestimmte Richtung umzulenken. Dazu ist der Umlenkspiegel bevorzugt relativ zum Strahlengang der Leuchtdiode bewegbar. Auf diese Weise kann die von der Leuchtdiode emittierte Strahlung bei Kurvenfahrten der Krümmung der Kurve nachgeführt werden.

Es ist ferner möglich, dass mittels Bewegung des Umlenkspiegels die Richtung der von der Leuchtdiode abgegebenen Strahlung relativ beispielsweise zur Fahrbahn, auf der sich das Kraftfahrzeug bewegt, geändert werden kann. So kann die Richtung der Strahlung nach unten - zur Fahrbahn hin - oder nach oben - von der Fahrbahn weg - gelenkt werden kann. Auf diese Weise kann die Richtung des abgestrahlten Lichts der Neigung des Kraftfahrzeuges angepasst sein.

Gemäß zumindest einer Ausführungsform des Kfz-Scheinwerfers ist der Umlenkspiegel drehbar gelagert. Beispielsweise kann der Umlenkspiegel um mehrere Achsen drehbar gelagert sein. In diesem Fall kann mittels Drehung des Umlenkspiegels beispielsweise sowohl die Neigung des Fahrzeugs ausgeglichen werden als auch ein Nachführen der Strahlrichtung der Leuchtdiode bei Kurvenfahrten ermöglicht sein.

Gemäß zumindest einer Ausführungsform des Kfz-Scheinwerfers umfasst der Umlenkspiegel einen Polygonradspiegel. Das heißt, der Umlenkspiegel umfasst mehrere Spiegelflächen, die zu einem Polygonrad angeordnet sind. Dazu weist der Umlenkspiegel beispielsweise eine zylinderartige Form auf, wobei die Mantelfläche des Zylinders durch mehrere, ebene oder gewölbte Spiegelflächen gebildet ist.

Bevorzugt ist der Polygonradspiegel relativ zum Strahlengang der Leuchtdiode bewegbar, beispielsweise drehbar gelagert. Durch Drehung des Polygonradspiegels um seine Längsachse ist die Richtung der reflektierten Strahlung einstellbar.

Gemäß zumindest einer Ausführungsform des Kfz-Scheinwerfers ist der Polygonradspiegel derart drehbar gelagert, dass durch Drehung des Polygonradspiegels unterschiedliche Spiegelflächen des Polygonradspiegels ausgeleuchtet werden. Das heißt, es ist möglich, dass der Polygonradspiegel um einen solchen Winkel gedreht werden kann, dass eine andere Spiegelfläche - beispielsweise eine benachbarte Spiegelfläche - von der Leuchtdiode ausgeleuchtet wird. Auf diese Weise ist es mittels Drehung des Polygonradspiegels möglich zwischen der Ausleuchtung unterschiedlicher Spiegelflächen zu schalten.

Gemäß zumindest einer Ausführungsform weist der Polygonradspiegel wenigstens zwei Spiegelflächen mit voneinander verschiedenen optischen Eigenschaften auf. So kann eine der Spiegelflächen derart geformt sein, dass sie geeignet ist, die von der Leuchtdiode emittierte Strahlung zu kolliminieren. Dazu kann die Spiegelfläche zum Beispiel eine konkave Krümmung aufweisen. Auf diese Weise kann konzentrierte Strahlung erreicht sein, die beispielsweise als Teil einer Fernlichtschaltung des Scheinwerfers zum Einsatz kommt.

Eine weitere Spiegelfläche des Polygonradspiegels kann geeignet sein, das Licht der Leuchtdiode diffus zu reflektieren. Auf diese Weise kann beispielsweise ein breiter Strahlkegel der Anordnung realisiert sein, wie er etwa bei einer Stadtlichtschaltung des Scheinwerfers Verwendung finden kann. Mittels Ausleuchten der unterschiedlichen Spiegelflächen des Polygonradspiegels kann also zwischen verschiedenen Abstrahlcharakteristika der Anordnung aus Leuchtdiode und Polygonradspiegel und damit des Scheinwerfers geschaltet werden.

Gemäß zumindest einer Ausführungsform umfasst die Vorrichtung zum steuerbaren Manipulieren des Strahlengangs der von der Leuchtdiode emittierten elektromagnetischen Strahlung eine keilförmige Scheibe. Das heißt, die Scheibe weist beispielsweise einen dreieckigen Querschnitt auf.

Die keilförmige Scheibe ist aus einem Material gebildet, das zumindest für einen Teil der von der Leuchtdiode emittierten elektromagnetischen Strahlung durchlässig ist. Bei Durchtritt durch die Scheibe wird zumindest ein Teil der von der Leuchtdiode emittierten elektromagnetischen Strahlung gebrochen. Dies ermöglicht eine definierte Richtungsänderung der Strahlung. Vorzugsweise ist die keilförmige Scheibe als Vollkörper ausgebildet. Das heißt, die keilförmige Scheibe ist vorzugsweise kavitätsfrei. Bevorzugt ist die keilförmige Scheibe dann aus einem homogenen Material gebildet. Beispielsweise kann die keilförmige Scheibe dabei aus einem Glas bestehen.

Gemäß zumindest einer Ausführungsform des Kfz-Scheinwerfers ist die Position der Scheibe im Strahlengang der Leuchtdiode bewegbar. Das heißt, die Scheibe ist bevorzugt in Richtungen längs und/oder quer zum Strahlengang bewegbar. Dadurch ist es möglich eine Richtungsänderung der elektromagnetischen Strahlung aufgrund der Brechung an der Scheibe definiert einzustellen. Mittels Änderung der Position der keilförmigen Scheibe im Strahlengang kann beispielsweise die optische Position oder der optische Abstand der Leuchtdiode relativ zu einer Projektionslinse verändert werden. Weiter ist die Richtungsänderung der Strahlung durch den Öffnungswinkel des Keils sowie den Brechungsindex des Materials, aus dem die keilförmige Scheibe gebildet ist, bestimmt.

Es ist darüber hinaus auch möglich, dass die keilförmige Scheibe zumindest Teile umfasst, die Licht streuend oder Licht filternd ausgebildet sind. Durch Bewegen eines Teils des Keils in den Strahlengang der Leuchtdiode kann dann zur Richtungsänderung eine Aufweitung des Strahlenkegels, ein Abdunkeln oder eine Farbänderung der emittierten elektromagnetischen Strahlung erreicht sein. Der Grad der Streuung oder der Abdunklung ist dabei durch die Dicke der Scheibe am Strahlungsdurchtritt und damit mittels der Position der Scheibe im Strahlengang der Leuchtdiode einstellbar.

Gemäß zumindest einer Ausführungsform des Kfz-Scheinwerfers umfasst die Vorrichtung zum steuerbaren Manipulieren des Strahlengangs einer Leuchtdiode ein Element, dessen optische Eigenschaften mittels Anlegen einer elektrischen Spannung einstellbar sind. Dazu ist das Element derart im Strahlengang der Leuchtdiode angeordnet, dass es zumindest einen Teil der von der Leuchtdiode emittierten elektromagnetischen Strahlung optisch beeinflussen kann. Bei den optischen Eigenschaften des Elements kann es sich beispielsweise um den Brechungsindex, Absorptionseigenschaften, Filtereigenschaften oder Licht streuende Eigenschaften des Elements handeln.

Gemäß zumindest einer Ausführungsform enthält das Element ein elektrochromes Material. Das bedeutet, abhängig von einer an das Element anliegenden Spannung sind die Farbfiltereigenschaften des Elements einstellbar. Das Element kann dann beispielsweise so geschaltet werden, dass es nur mehr Licht einer bestimmten Farbe transmittiert. Auf diese Weise kann beispielsweise gelbes Scheinwerferlicht erzeugt sein, das für Fahrten im Nebel besonders gut geeignet ist.

Gemäß zumindest einer Ausführungsform des Kfz-Scheinwerfers umfasst das Element ein selbstdunkelndes Glas. Das bedeutet, abhängig von einer an das Element anliegenden Spannung sind die Strahlungsabsorptionseigenschaften des Elements einstellbar. Beispielsweise kann auf diese Weise die Intensität und/oder die Helligkeit des von der Leuchtdiode emittierten Lichts reduziert werden. Der Einsatz eines solchen Elements ist beispielsweise für Taglichtfahrten oder eine Abblendlichtschaltung geeignet.

Gemäß zumindest einer Ausführungsform des Kfz-Scheinwerfers umfasst das Element eine schaltbare Diffusorscheibe. Das heißt, abhängig von einer an das Element anliegenden Spannung sind die Lichtstreueigenschaften des Elements einstellbar.

Bevorzugt ist der Grad der Streuung durch die Diffusorscheibe dabei abhängig von der an die Diffusorscheibe anliegenden Spannung. So kann eine relativ starke Streuung der von der Leuchtdiode emittierten elektromagnetischen Strahlung für eine relativ breite Abstrahlcharakteristik zur Ausleuchtung des Raums direkt vor dem Kraftfahrzeug Verwendung finden. Eine solche Abstrahlcharakteristik eignet sich beispielsweise für langsame Fahrt im Stadtgebiet. Eine geringere Streuung ist beispielsweise für Fahrten auf Landstraßen geeignet.

Gemäß zumindest einer Ausführungsform des Kfz-Scheinwerfers ist der Brechungsindex des Elements abhängig von einer an das Element anliegenden Spannung einstellbar. Dazu kann es sich bei dem Element beispielsweise um eine Hochspannungsmembran handeln. Durch Änderung der an die Membran anliegenden Spannung ist so beispielsweise zwischen verschiedenen Abstrahlcharakteristika schaltbar.

Gemäß zumindest einer Ausführungsform des Kfz-Scheinwerfers ist die Position der Leuchtdiode relativ zu einem optischen Element veränderbar. Das optische Element kann beispielsweise eine Linse umfassen. Mittels einer Positionsänderung der Leuchtdiode relativ zum optischen Element kann beispielsweise eine Richtungsänderung der Strahlung erreicht sein. Mittels einer Positionsänderung der Leuchtdiode relativ zum optischen Element kann dann beispielsweise die Richtung des Strahlkegels der Krümmung einer Kurve nachgeführt werden.

Gemäß zumindest einer Ausführungsform des Kfz-Scheinwerfers weist der Scheinwerfer wenigstens zwei Leuchtdioden auf. Bevorzugt sind die Leuchtdioden derart im Scheinwerfer angeordnet, dass sie geeignet sind, verschiedene Raumwinkelbereiche auszuleuchten.

Das heißt, beispielsweise ist die Hauptabstrahlrichtung einer ersten Gruppe von Leuchtdioden - umfassend wenigsten eine Leuchtdiode - in gerader Richtung vom Kraftfahrzeug weg gerichtet, während die Hauptabstrahlrichtungen weiterer Leuchtdioden mit der Hauptabstrahlrichtung dieser Gruppe Winkel einschließen. Diese weiteren Leuchtdioden können dann zum Beispiel bei Kurvenfahrten des Kraftfahrzeugs zugeschaltet werden, so dass auf diese Weise die Richtung des vom Scheinwerfer abgestrahlten Lichts dem Kurvenverlauf folgt. Dazu können die Leuchtdioden beispielsweise auch auf einer flexiblen Leiterplatte angeordnet sein, die entsprechend geformt ist.

Bevorzugt weist der Scheinwerfer dabei eine Schaltvorrichtung auf, die geeignet ist, Leuchtdioden abhängig von der Fahrtrichtung des Kraftfahrzeugs zu schalten. Das heißt, die Schaltvorrichtung kann beispielsweise direkt an eine Lenkvorrichtung des Kraftfahrzeugs gekoppelt sein. Eine Lenkbewegung hat dann das Einschalten von entsprechend ausgerichteten Leuchtdioden zur Folge. Leuchtdioden, die Licht in gerader Richtung abstrahlen, können von der Schaltvorrichtung bei Kurvenfahrt gedimmt oder ausgeschaltet werden. Beim Zurückbewegen der Lenkvorrichtung in die Stellung für das Geradeausfahren werden die Leuchtdioden für Kurvenlicht mittels der Schaltvorrichtung wieder abgeschaltet.

Im Folgenden wird der hier beschriebene Kfz-Scheinwerfer anhand von Ausführungsbeispielen und den dazugehörigen Figuren näher erläutert. In den Ausführungsbeispielen und Figuren sind gleiche oder gleich wirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.
Figur 1 zeigt eine schematische Perspektivskizze der Leuchtdiode und der Vorrichtung zum steuerbaren Manipulieren des Strahlengangs der Leuchtdiode nach einem ersten Ausführungsbeispiel.
Figur 2 zeigt eine schematische Perspektivskizze einer Leuchtdiode und einer Vorrichtung zum steuerbaren Manipulieren des Strahlengangs der Leuchtdiode zur Erläuterung der Erfindung.
Figuren 3A, 3B und 3C zeigen eine schematische Perspektivskizze einer Leuchtdiode und einer Vorrichtung zum steuerbaren Manipulieren des Strahlengangs der Leuchtdiode zur Erläuterung der Erfindung.
Figur 4 zeigt eine schematische Perspektivskizze einer Leuchtdiode und einer Vorrichtung zum steuerbaren Manipulieren des Strahlengangs der Leuchtdiode zur Erläuterung der Erfindung.
Figur 5 zeigt eine schematische Perspektivskizze einer Leuchtdiode und einer Vorrichtung zum steuerbaren Manipulieren des Strahlengangs der Leuchtdiode zur Erläuterung der Erfindung.
Figur 6A zeigt eine schematische Perspektivskizze der Leuchtdiode nach einem ersten Ausführungsbeispiel.
Figur 6B zeigt eine schematische Perspektivskizze der Leuchtdiode nach dem ersten Ausführungsbeispiel mit einer Leuchtdiodenoptik.

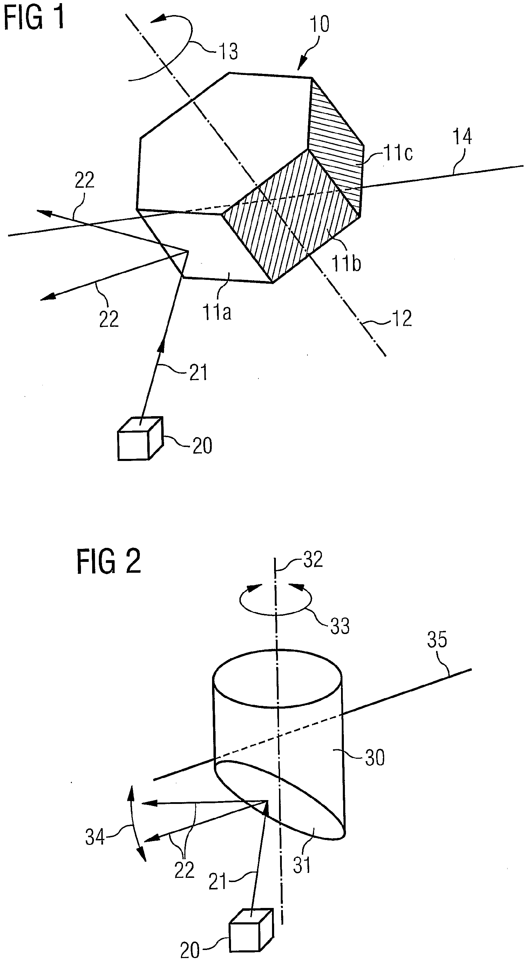

Figur 1 zeigt eine schematische Perspektivskizze einer Leuchtdiode 20 mit einer Vorrichtung zum steuerbaren Manipulieren des Strahlengangs 21, 22 der von der Leuchtdiode emittierten elektromagnetischen Strahlung.

Bei der Vorrichtung handelt es sich um einen Polygonradspiegel 10. Der Polygonradspiegel 10 weist Spiegelflächen 11a, 11b und 11c auf. Darüber hinaus kann der Polygonradspiegel 10 weitere Spiegelflächen aufweisen. Die maximale Zahl der Spiegelflächen kann etwa durch die Zahl der Kanten des Polygons bestimmt sein.

Die optischen Eigenschaften der Spiegelflächen 11a, 11b und 11c des Polygonradspiegels 10 können sich voneinander unterscheiden. Die Spiegelflächen können beispielsweise zum Fokussieren oder Streuen der auf sie treffenden Strahlung 21 der Leuchtdiode 20 geeignet sein. Die optischen Eigenschaften der Spiegelflächen 11a, 11b, 11c bestimmen die Abstrahlcharakteristik der von den Spiegelflächen reflektierten Strahlung 22. Das heißt, die Spiegelflächen 11a, 11b, 11c können Eigenschaften wie Form, Intensitätsverteilung, Farbe, Richtung und Öffnungswinkel der reflektierten Strahlung 22 bestimmen.

Beispielsweise kann eine der Spiegelflächen 11a, 11b, 11c einen Sandpapierspiegel umfassen. Ein solcher Sandpapierspiegel weist eine aufgeraute, reflektierende Oberfläche auf. Einfallende Strahlung 21 wird am Sandpapierspiegel diffus reflektiert. Auf diese Weise lässt sich beispielsweise eine Abstrahlcharakteristik des Scheinwerfers erzeugen, die besonders für Stadtlicht geeignet ist. Das heißt, der Raum im Vorfeld des Autos wird möglichst breit ausgeleuchtet.

Weitere Spiegelflächen 11a, 11b, 11c können zum Beispiel für Abblendlicht-, Fernlicht- oder Autobahnlichtschaltungen des Scheinwerfers geeignet sein.

Bevorzugt ist der Polygonradspiegel 10 um seine Längsachse 12 drehbar gelagert. Dabei kann eine Drehung des Polygonradspiegels - angedeutet durch Pfeile 13 - um solche Winkel erfolgen, dass statt einer ersten Spiegelfläche 11a eine andere Spiegelfläche 11b, 11c ausgeleuchtet wird. Auf diese Weise ist mittels Drehung des Polygonradspiegels 10 um die Drehachse 12 zwischen unterschiedlichen Abstrahlcharakteristika schaltbar.

Erfolgt die Drehung des Polygonradspiegels 10 um kleine Winkel - derart, dass sich der Winkel, unter dem der einfallende Strahl 21 auf eine Spiegelfläche 11a trifft, ändert, kann mittels der Drehung die Abstrahlrichtung der Strahlung bei ansonsten im wesentlichen unveränderter Abstrahlcharakteristik eingestellt werden. Solche Drehungen des Polygonradspiegels 10 sind beispielsweise geeignet, den Strahlkegel eines Scheinwerfers oder Teile des Strahlkegels eines Scheinwerfers bei Kurvenfahrt der Krümmung einer Kurve nachzuführen.

Insgesamt stellt der drehbar gelagerte Polygonradspiegel also eine Vorrichtung dar, mittels der verschiedene Ausleuchtungszustände und Abstrahlrichtungen eingestellt werden können.

Weiter kann es auch möglich sein, dass der Polygonradspiegel 10 um eine Achse 14, die beispielsweise quer zur Längsachse 12 verläuft drehbar gelagert ist. Auf diese Weise kann die Richtung der reflektierten Strahlung 22 beispielsweise zu einer Fahrbahn hin oder von einer Fahrbahn weg gerichtet werden. Es ist damit also möglich, die Neigung eines Kraftfahrzeugs auszugleichen.

Figur 2 zeigt eine Vorrichtung zum steuerbaren Manipulieren der von einer Leuchtdiode 20 abgegebenen Strahlung 21, 22. Bei der gezeigten Vorrichtung handelt es sich um einen Zylinderspiegel 30. Der Zylinderspiegel 30 weist eine Spiegelfläche 31 auf, die durch einen Zylinderschnitt gebildet ist. Die Spiegelfläche ist geeignet, von der Leuchtdiode emittierte elektromagnetische Strahlung 21 zu reflektieren. Die optischen Eigenschaften der Spiegelfläche 31 können derart gewählt sein, dass die reflektierte Strahlung eine gewünschte Abstrahlcharakteristik aufweist.

Der Zylinderspiegel 30 ist um seine Längsachse 32 drehbar gelagert. Durch Drehung um die Längsachse 32 - angedeutet durch den Pfeil 33 - ist die Richtung der reflektierten Strahlung 22 einstellbar. Beispielsweise kann die Abstrahlrichtung der reflektierten Strahlung 22 der Krümmung einer Kurve bei Kurvenfahrt nachgeführt werden. Je nach Anordnung des Zylinderspiegels und der Leuchtdiode relativ zueinander ist es aber auch möglich, dass mittels einer Drehung des Zylinderspiegels eine Neigung des Kfz ausgeglichen werden kann.

Darüber hinaus ist es zudem möglich, dass der Zylinderspiegel um eine Querachse 35, die beispielsweise senkrecht zur Längsachse 32 verläuft drehbar gelagert ist.

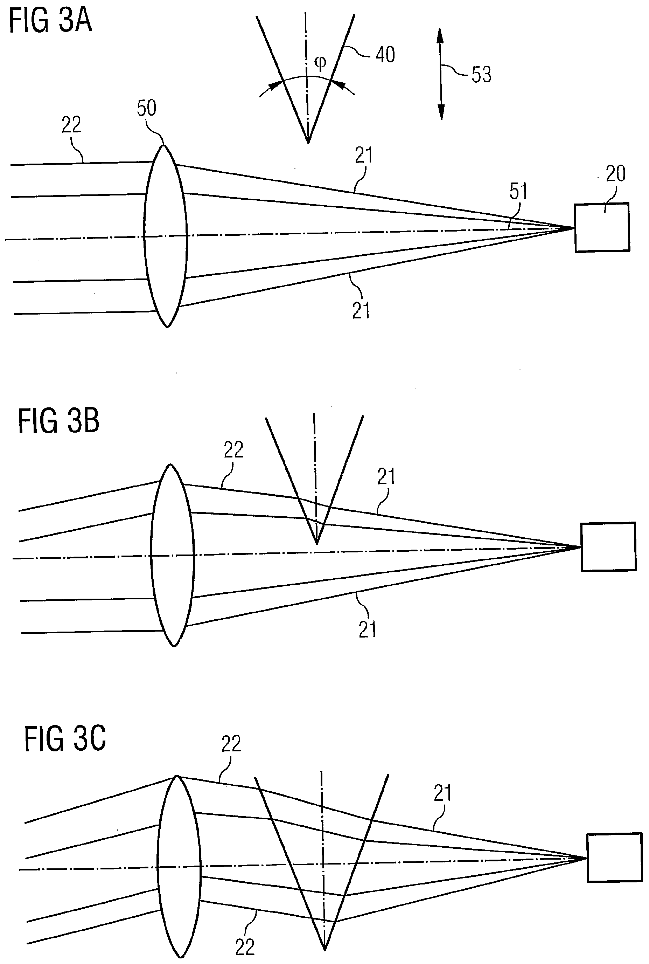

Die Figuren 3A bis 3C zeigen jeweils eine Vorrichtung zum steuerbaren Manipulieren des

Strahlengangs 21, 22 einer Leuchtdiode 20. In diesen Beispielen ist der Leuchtdiode eine Linse, beispielsweise eine Projektionslinse 50 nachgeordnet. Die Leuchtdiode 20 befindet sich zum Beispiel in der Fokalebene der Linse 50 auf der optischen Achse 51 der Projektionslinse 50. Bei der Vorrichtung zum steuerbaren Manipulieren des Strahlengangs der Leuchtdiode 20 handelt es sich in diesem Beispiel um eine keilförmige Scheibe 40. Die keilförmige Scheibe 40 enthält ein transparentes Material, beispielsweise ein Glas. Die keilförmige Scheibe 40 weist einen Öffnungswinkel ϕ auf. Bevorzugt ist die keilförmige Scheibe 40 quer zur optischen Achse 51 der Projektionslinse 50 verschiebbar - angedeutet durch den Doppelpfeil 53. Das heißt, die keilförmige Scheibe 40 ist in und aus dem Strahlengang 21 der Leuchtdiode 20 bewegbar.

Figur 3B zeigt die keilförmige Scheibe 40 derart in den Strahlengang der Leuchtdiode 20 geschoben, dass ein Teil der von der Leuchtdiode emittierten Strahlung 21 die keilförmige Scheibe 40 durchstrahlt. Beim Durchtritt durch die keilförmige Scheibe 40 wird die Strahlung 21 gebrochen. Dadurch ändert sich die optische Position sowie die optische Entfernung der Leuchtdiode 20 relativ zur Linse 50 für den Teil der Strahlung, der die keilförmige Scheibe 40 durchstrahlt.

Figur 3C zeigt die keilförmige Scheibe 40 derart im Strahlengang 21 der Leuchtdiode 20 angeordnet, dass ein Großteil oder die Gesamte von der Leuchtdiode emittierte Strahlung die Scheibe 40 durchstrahlt.

Der Grad der Brechung der Strahlung 21 an der keilförmigen Scheibe 40 ist dabei durch den Brechungsindex des verwendeten Materials und dem Öffnungswinkel ϕ bestimmt. Mittels Bewegung der keilförmigen Scheibe 40 im Strahlengang der Leuchtdiode ist es beispielsweise möglich, stufenlos zwischen verschiedenen Abstrahlcharakteristika zu schalten. Beispielsweise kann auf diese Weise zwischen Stadtlicht, Abblendlicht, Fernlicht und Autobahnlicht fließend umgeschaltet werden.

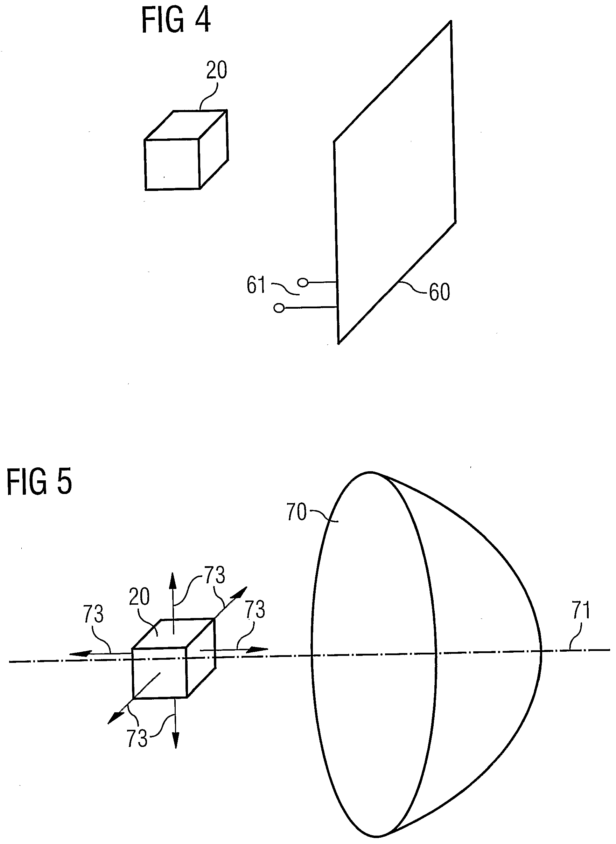

Figur 4 zeigt eine Vorrichtung zum steuerbaren Manipulieren der von der Leuchtdiode 20 emittierten elektromagnetischen Strahlung. Bei der Vorrichtung handelt es sich um ein Element 60, dessen optische Eigenschaften mittels Anlegen einer elektrischen Spannung 61 veränderbar sind. Beispielsweise umfasst das Element 60 wenigstens eines der folgenden Elemente: Hochspannungsmembran, schaltbare Diffusorscheibe, selbstdunkelndes Glas oder ein elektrochromes Material.

Bei der schaltbaren Diffusorscheibe ist es beispielsweise möglich, mittels Anlegen einer elektrischen Spannung von Klarsicht zu einem Milchglas umzuschalten. Auf diese Weise kann die Strahlung der Leuchtdiode gestreut und aufgeweitet werden, sodass der Raum vor dem Fahrzeug gleichmäßiger ausgeleuchtet ist. Beispielsweise kann damit auf einfache Weise ein Stadtlicht des Kfz-Scheinwerfers realisiert sein. Der Grad der Streuung kann beispielsweise durch die Höhe der anliegenden Spannung 61 einstellbar sein.

Handelt es sich bei dem Element um eine Hochspannungsmembran, so kann mittels des Elements eine adaptive Optik realisiert sein. Das heißt, bei Anlegen einer elektrischen Spannung 61 an die Hochspannungsmembran ändert sich deren Brechungsindex. Auf diese Weise kann zwischen verschiedenen Abstrahlcharakteristika wie Stadtlicht, Abblendlicht, Fernlicht und Autobahnlicht umgeschaltet werden.

Handelt es sich bei dem Material um ein selbstdunkelndes Glas oder um ein elektrochromes Material, so ist es möglich mittels Anlegen einer elektrischen Spannung 61 die Intensität und Farbe des abgestrahlten Lichts 22 einzustellen.

Figur 5 zeigt eine Anordnung der Leuchtdiode 20 relativ zu einem optischen Element beispielsweise einer Projektionslinse 70. Bevorzugt ist die Leuchtdiode relativ zum optischen Element bewegbar. Das heißt, die Leuchtdiode kann entlang der durch die Pfeile 73 angedeuteten Richtung bewegt werden. Weiter ist es möglich, dass die Leuchtdiode relativ zur Projektionslinse 70 drehbar gelagert ist. Beispielsweise kann die Leuchtdiode 20 so montiert sein, dass die Hauptabstrahlrichtung der Leuchtdiode 20 nicht auf der optischen Achse 71 der Projektionslinse 70 liegt. Durch Abstandsänderung der Leuchtdiode 20 relativ zur Linse 70 ist dann der Winkel, in dem die von der Leuchtdiode emittierte Strahlung auf die Straße projiziert wird, einstellbar. Damit ist es auf einfache Weise möglich mittels Änderung des Abstands zwischen Leuchtdiode 20 und Projektionslinse 70 die Strahlung der Leuchtdiode 20 beispielsweise der Krümmung einer Kurve nachzuführen.

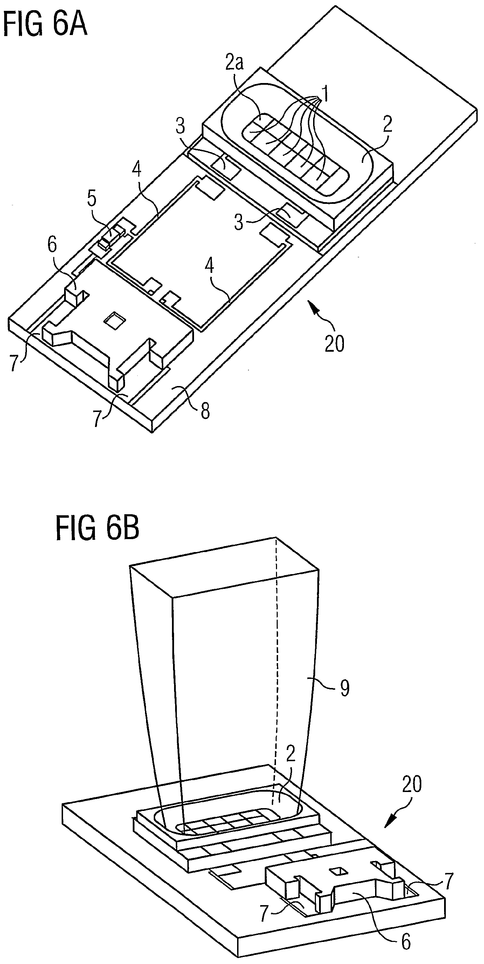

Figur 6A zeigt eine schematische Perspektivskizze eines Ausführungsbeispiels der Leuchtdiode 20. Figur 6B zeigt die Leuchtdiode 20 mit Leuchtdiodenoptik 9.

Die Leuchtdiode 20 umfasst beispielsweise fünf Leuchtdiodenchips 1. Bei den Leuchtdiodenchips 1 handelt es sich zum Beispiel um Dünnfilm-Leuchtdiodenchips 1 mit einer Lichtausbeute von jeweils wenigstens 20 lm pro Watt.

Das heißt, bei den Leuchtdiodenchips 1 ist das Aufwachssubstrat für die epitaktisch gewachsenen Schichten der Leuchtdiodenchips entweder gedünnt oder vollständig entfernt. Die epitaktisch gewachsenen Schichten sind dann mit ihrer dem ursprünglichen Aufwachssubstrat abgewandten Oberfläche auf ein Trägerelement aufgebracht. Optoelektronische Halbleiterchips in Dünnfilmbauweise sind beispielsweise in den Druckschriften WO 02/13281 A1 oder EP 0905797 A2 beschrieben, deren Offenbarungsgehalt hinsichtlich der Dünnfilmbauweise von optoelektronischen Halbleiterchips hiermit ausdrücklich durch Rückbezug aufgenommen wird.

Bevorzugt sind die Leuchtdiodenchips 1 geeignet, Licht im blauen Spektralbereich zu erzeugen. Den Leuchtdiodenchips 1 ist dann ein Lumineszenzkonversionsmaterial nachgeordnet. Der frequenzkonvertierte Anteil der von den Leuchtdiodechips 1 abgegebenen Strahlung mischt sich mit dem nicht-konvertierten Anteil bevorzugt zu weißem Licht.

Die Leuchtdiodenchips 1 sind zum Beispiel am Boden 2a eines Gehäuses 2 angeordnet. Das Gehäuse 2 kann zum Beispiel aus einem keramischen Material gebildet sein. Bevorzugt weist das Gehäuse 2 Innenwände auf, die zumindest stellenweise reflektierend ausgebildet sind. Die Innenwände des Gehäuses 2 können zum Beispiel nach Art eines nicht-abbildenden optischen Konzentrators geformt sein, der in umgekehrter Richtung durchstrahlt wird, so dass eine Kollimation der von den Leuchtdiodenchips 1 emittierten Strahlung resultiert. Den Innenwänden des Gehäuses 2 kann in Hauptabstrahlrichtung der Leuchtdiodenchips 1 eine Leuchtdiodenoptik 9 nachgeordnet sein, die ihrerseits nach Art eines nicht-abbildenden optischen Konzentrators geformt sein kann.

Die Leuchtdiodenchips 1 sind außerhalb des Gehäuses 2 an den Kontaktflächen 3 kontaktiert. Leiterbahnen 4 verbinden die Kontaktflächen 3 mit Anschlussstellen 7, über die die Leuchtdiode 20 von außen kontaktiert werden kann. Beispielsweise kann der Anschluss der Leuchtdiode 20 an das Stromnetz eines Kraftfahrzeuges mittels eines Steckers am Gegenstecker 6 erfolgen. Zumindest ein Varistor 5 fungiert als Überspannungsschutz der Leuchtdiode 20. Gegenstecker 6, Varistor 5 sowie Gehäuse 2 sind zum Beispiel auf einer Metallkernplatine 8 angeordnet, die sowohl als Leiterplatte als auch als Wärmeleitelement für die im Betrieb von den Leuchtdiodenchips 1 erzeugte Wärme fungiert.

Dabei ist es möglich, dass auf der Metallkernplatine 8 oder außerhalb der Leuchtdiode 20 eine Vorrichtung zum Dimmen der Leuchtdiodenchips 1 vorgesehen ist. Auf diese Weise kann die Abstrahlcharakteristik der Leuchtdiode 20 zusätzlich durch Intensitätsänderung an äußere Bedingungen wie Wetter oder Beleuchtungsverhältnisse angepasst werden. Weiter ist eine Intensitätsänderung des von der Leuchtdiode 20 abgestrahlten Lichts auch durch gezieltes Zu- und Abschalten einzelner Leuchtdiodenchips 1 möglich.

Ein Scheinwerfer kann eine Vielzahl der beschriebenen Leuchtdioden 20 aufweisen. So ist es möglich, dass einer in den Figuren 1 bis 5 gezeigten Vorrichtung zwei oder mehrere Leuchtdioden 20 zugeordnet sind. Weiter ist es möglich, dass die Leuchtdioden 20 derart im Scheinwerfer positioniert sind, dass sie jeweils einen bestimmten Raumwinkelbereich außerhalb des Kraftfahrzeugs ausleuchten. Bei Kurvenfahrten können Leuchtdioden dann derart zu- oder abgeschaltet werden, dass der Lichtkegel des Scheinwerfers zum Beispiel der Krümmung einer Kurve folgt.

Die Erfindung ist nicht durch die Beschreibung anhand der Ausführungsbeispiele beschränkt.

## Patentansprüche

1. Kfz-Scheinwerfer, mit
- wenigstens einer Leuchtdiode (1), und
- einer Vorrichtung (10, 30, 40, 60) zum steuerbaren Manipulieren des Strahlengangs (21, 22), der von der Leuchtdiode (1) emittierten elektromagnetischen Strahlung, aufweisend einen Umlenkspiegel, der drehbar gelagert ist, wobei der Umlenkspiegel einen Polygonradspiegel (10) umfasst, der Polygonradspiegel (10) wenigstens zwei Spiegelflächen (11a, 11b, 11c) aufweist und der Polygonradspiegel (10) derart drehbar gelagert ist, dass durch Drehung des Spiegels unterschiedliche Spiegelflächen (11a, 11b, 11c) ausgeleuchtet werden können
**dadurch gekennzeichnet, dass**
- mittels Ausleuchten der unterschiedlichen Spiegelflächen (11a, 11b, 11c) des Polygonradspiegels (10) zwischen einer der folgenden unterschiedlichen Abstrahlcharakteristika des Kfz-Scheinwerfers geschaltet werden kann:
Abblendlichtschaltung, Fernlichtschaltung,
Autobahnlichtschaltung.

2. Kfz-Scheinwerfer nach Anspruch 1,
bei dem die Vorrichtung (10, 30, 40, 60) geeignet ist, die von der Leuchtdiode (1) emittierte elektromagnetische Strahlung (21) zu reflektieren.

3. Kfz-Scheinwerfer nach einem der Ansprüche 1 oder 2,
bei dem die Vorrichtung (10, 30, 40, 60) geeignet ist, die von der Leuchtdiode (1) emittierte elektromagnetische Strahlung (21) zu brechen.

4. Kfz-Scheinwerfer nach einem der Ansprüche 1 bis 3,
bei dem die Vorrichtung (10, 30, 40, 60) geeignet ist, die von der Leuchtdiode (1) emittierte elektromagnetische Strahlung (21)zu streuen.

5. Kfz-Scheinwerfer nach einem der Ansprüche 1 bis 4,
bei dem die Vorrichtung (10, 30, 40, 60) geeignet ist, die von der Leuchtdiode (1) emittierte elektromagnetische Strahlung (21)zu absorbieren.

6. Kfz-Scheinwerfer nach einem der Ansprüche 1 bis 5,
bei dem die Vorrichtung (10, 30, 40, 60) geeignet ist, die von der Leuchtdiode (1) emittierte elektromagnetische Strahlung (21) Frequenz zu konvertieren.

7. Kfz-Scheinwerfer nach einem der Ansprüche 1 bis 6,
bei dem die Vorrichtung (10, 30, 40, 60) geeignet ist, die von der Leuchtdiode (1) emittierte elektromagnetische Strahlung (21) zu filtern.

8. Kfz-Scheinwerferelement nach einem der Ansprüche 1 bis 7, mit
- einer ersten Gruppe von Leuchtdioden, umfassend zumindest eine Leuchtdiode (1), und
- weiteren Leuchtdioden, wobei
- jede der Hauptabstrahlrichtungen der weiteren Leuchtdioden mit der Hauptabstrahlrichtung der ersten Gruppe von Leuchtdioden einen Winkel einschließt.

9. Kfz-Scheinwerferelement nach dem vorherigen Anspruch, aufweisend eine Schaltvorrichtung, die geeignet ist, Leuchtdioden (1) abhängig von einer Fahrtrichtung des Kraftfahrzeugs zu schalten.

## Claims

1. Motor-vehicle headlight, having
- at least one light-emitting diode (1), and
- an apparatus (10, 30, 40, 60) for controllable manipulation of the beam path (21, 22), of the electromagnetic radiation emitted from the light-emitting diode (1), having a deflection mirror, which is mounted such that it can rotate, wherein the deflection mirror comprises a polygonal wheel mirror (10), the polygonal wheel mirror (10) has at least two mirror surfaces (11a, 11b, 11c) and the polygonal wheel mirror (10) is mounted such that it can rotate, in such a way that different mirror surfaces (11a, 11b, 11c) can be illuminated by rotation of the mirror **characterized in that**
- by illumination of the different mirror surfaces (11a, 11b, 11c) of the polygonal wheel mirror (10) it is possible to switch between one of the following different emission characteristics of the motor-vehicle headlight: dipped-beam switching operation, main-beam switching operation, motorway light switching operation.

2. Motor-vehicle headlight according to Claim 1,
in which the apparatus (10, 30, 40, 60) is suitable for reflection of the electromagnetic radiation (21) emitted from the light-emitting diode (1).

3. Motor-vehicle headlight according to one of Claims 1 or 2,
in which the apparatus (10, 30, 40, 60) is suitable for refraction of the electromagnetic
radiation (21) emitted from the light-emitting diode (1).

4. Motor-vehicle headlight according to one of Claims 1 to 3,
in which the apparatus (10, 30, 40, 60) is suitable for scattering the electromagnetic radiation (21) emitted from the light-emitting diode (1).

5. Motor-vehicle headlight according to one of Claims 1 to 4,
in which the apparatus (10, 30, 40, 60) is suitable for absorption of the electromagnetic radiation (21) emitted from the light-emitting diode (1).

6. Motor-vehicle headlight according to one of Claims 1 to 5,
in which the apparatus (10, 30, 40, 60) is suitable for frequency conversion of electromagnetic radiation (21) emitted from the light-emitting diode (1).

7. Motor-vehicle headlight according to one of Claims 1 to 6,
in which the apparatus (10, 30, 40, 60) is suitable for filtering of the electromagnetic radiation (21) emitted from the light-emitting diode (1).

8. Motor-vehicle headlight element according to one of Claims 1 to 7, having
- a first group of light-emitting diodes, comprising at least one light-emitting diode (1), and
- further light-emitting diodes, wherein
- each of the main emission directions of the further light-emitting diodes forms an angle with the main emission direction of the first group of light-emitting diodes.

9. Motor-vehicle headlight element according to the preceding claim,
having a switching apparatus which is suitable for switching light-emitting diodes (1) as a function of the direction of travel of the motor vehicle.

## Revendications

1. Phare de véhicule à moteur, comportant
- au moins une diode électroluminescente (1), et
- un dispositif (10, 30, 40, 60) permettant de commander par manipulation le chemin de faisceau (21, 22) du rayonnement électromagnétique émis par la diode électroluminescente (1), comprenant un miroir de déviation qui est monté de façon à pouvoir tourner, dans lequel le miroir de déviation comprend un miroir à roue polygonale (10), le miroir à roue polygonale (10) comprend au moins deux surfaces réfléchissantes (11a, 11b, 11c) et le miroir à roue polygonale (10) est monté de façon à pouvoir tourner afin que des surfaces réfléchissantes (11a, 11b, 11c) différentes puissent être éclairées par mise en rotation du miroir,
**caractérisé en ce que**
- du fait de l'éclairement des différentes surfaces réfléchissantes (11a, 11b, 11c) du miroir à roue polygonale (10), le phare de véhicule à moteur peut être commuté entre l'une des différentes caractéristiques de rayonnement suivantes :
- commutation de feu de croisement, commutation de feu de route, commutation de feu d'autoroute.

2. Phare de véhicule à moteur selon la revendication 1,
dans lequel le dispositif (10, 30, 40, 60) est approprié pour réfléchir le rayonnement électromagnétique (21) émis par la diode électroluminescente (1).

3. Phare de véhicule à moteur selon l'une quelconque des revendications 1 ou 2,
dans lequel le dispositif (10, 30, 40, 60) est approprié pour réfracter le rayonnement électromagnétique (21) émis par la diode électroluminescente (1).

4. Phare de véhicule à moteur selon l'une quelconque des revendications 1 à 3,
dans lequel le dispositif (10, 30, 40, 60) est approprié pour diffuser le rayonnement électromagnétique (21) émis par la diode électroluminescente (1).

5. Phare de véhicule à moteur selon l'une quelconque des revendications 1 à 4,
dans lequel le dispositif (10, 30, 40, 60) est approprié pour absorber le rayonnement électromagnétique (21) émis par la diode électroluminescente (1).

6. Phare de véhicule à moteur selon l'une quelconque des revendications 1 à 5,
dans lequel le dispositif (10, 30, 40, 60) est approprié pour convertir la fréquence du rayonnement électromagnétique (21) émis par la diode électroluminescente (1).

7. Phare de véhicule à moteur selon l'une quelconque des revendications 1 à 6,
dans lequel le dispositif (10, 30, 40, 60) est approprié pour filtrer le rayonnement électromagnétique (21) émis par la diode électroluminescente (1).

8. Elément de phare de véhicule à moteur selon l'une quelconque des revendications 1 à 7, comportant :
- un premier groupe de diodes électroluminescentes, comprenant au moins une diode électroluminescente (1), et
- d'autres diodes électroluminescentes, dans lequel
- chacune des directions de rayonnement principales des autres diodes électroluminescentes forme un angle avec la direction de rayonnement principale du premier groupe de diodes électroluminescentes.

9. Elément de phare de véhicule à moteur selon la revendication précédente, comprenant un dispositif de commutation qui est approprié pour commuter les diodes électroluminescentes (1) en fonction d'une direction de conduite du véhicule à moteur.
